# EUROPEAN PATENT SPECIFICATION

(11) **EP 3 849 143 B1**
(45) Date of publication and mention of the grant of the patent: **28.01.2026**
(21) Application number: 20217998.2
(22) Date of filing: 31.12.2020
(51) Int. Cl.: H04L 41/0631, H04L 43/08, H04L 43/20

(54) **AGGREGATED SIGNAL FEEDBACK FOR SAAS EXPERIENCE IN MULTI-CLOUD SD-WAN DEPLOYMENTS**
AGGREGIERTE SIGNALRÜCKKOPPLUNG FÜR SAAS-ERFAHRUNGEN IN MULTI-CLOUD-SD-WAN-BEREITSTELLUNGEN
RÉTROACTION DE SIGNAL AGRÉGÉE POUR EXPÉRIENCE SAAS DANS DES DÉPLOIEMENTS SD-WAN MULTI-NUAGE

(30) Priority: 07.01.2020 US 202062957876 P; 18.03.2020 US 202016822368
(43) Date of publication of application: 14.07.2021
(73) Proprietor: Cisco Technology, Inc., San Jose, CA 95134 (US)
(72) Inventor: VASSEUR, Jean-Philippe, 38410 Saint Martin D'uriage (FR); LAKSHMIKANTHAN, Ramanathan, Santa Clara, CA 95051 (US); WOOD, Steve William, Ottawa, Ontario K2S 1E4 (CA); DURAIRAJ, Ramesh, Fremont, CA 94539 (US)
(74) Representative: Mathys & Squire

(56) References cited:
- US-A1- 2018 212 821
- US-A1- 2019 372 827

## Description

### TECHNICAL FIELD

The present disclosure relates generally to computer networks, and, more particularly, to aggregated signal feedback for software as a service (SaaS) experience in multi-cloud software-defined wide area network (SD-WAN) deployments.

### BACKGROUND

Software-defined wide area networks (SD-WANs) represent the application of software-defined networking (SDN) principles to WAN connections, such as connections to cellular networks, the Internet, and Multiprotocol Label Switching (MPLS) networks. The power of SD-WAN is the ability to provide consistent service level agreement (SLA) for important application traffic transparently across various underlying tunnels of varying transport quality and allow for seamless tunnel selection based on tunnel performance characteristics that can match application SLAs.

With the emergence of technologies such as Infrastructure as a Service (IaaS) and Software as a Service (SaaS), the resulting virtualization of services has led to a dramatic shift in the traffic loads of many large enterprises. Indeed, many SaaS services can now be reached in a typical deployment via a number of different network paths. However, path selection can also greatly impact the user/application experience associated with a given SaaS application.

US 2018/212821 describes methods, systems, and storage media for telemetry adaptation are disclosed herein. In an embodiment, a networking device may include a data collector agent module to receive measurement data from measurement sources according to an initial telemetry policy and to provide the measurement data to the one or more servers of the monitoring system. The networking device may include an anomaly detection module to receive measurement data from the data collector agent module, to detect an anomaly in the measurement data, and to provide an indication of the anomaly to the data collector agent module for the data collector agent module to provide a first modified telemetry policy for the measurement sources.

US2019/0372827 describes that in one embodiment, a network assurance service that monitors a network detects a set of anomalous measurements from the network over time by applying a machine learning based anomaly detector to the measurements. The service computes, for each of the anomalous measurements, an anomaly severity score based on weighted severity factors used to compute anomaly severity scores. The severity factors include one or more of: a device type associated with the measurements, a duration of the anomalous measurements, a network impact associated with the anomalous measurements, or an aggregate metric based on distances between the measurements and a prediction band of the anomaly detector. The service sends an anomaly alert to a user interface, based on the computed anomaly severity score, and receives feedback from the user interface regarding the anomaly alert. The service adjusts, based on the received feedback, weightings of the severity factors used to compute anomaly severity scores.

The present invention is set out in the appended claims.

### BRIEF DESCRIPTION OF THE DRAWINGS

FIGS. 1A-1B illustrate an example communication network;
FIG. 2 illustrates an example network device/node;
FIGS. 3A-3B illustrate example network deployments;
FIG. 4 illustrates an example network deployment model;
FIG. 5 illustrates example plots demonstrating a correlation between local edge state and data loss;
FIG. 6 illustrates an example of an SD-WAN service point;
FIG. 7 illustrates an example of an aggregated signal feedback (ASF) mechanism; and
FIG. 8 illustrates an example simplified procedure for sending feedback to a Software as a Service (SaaS) provider.

### DESCRIPTION OF EXAMPLE EMBODIMENTS

### Overview

According to one or more embodiments of the disclosure, an edge device located at an edge of a local network provides connectivity between the local network and a cloud-based software as a service (SaaS) provider via one or more interfaces. The edge device obtains telemetry data associated with the edge device for a plurality of metrics. The edge device makes a determination that one or more of the plurality of metrics is anomalous. The edge device sends, based on the determination, an indication of the determination to the SaaS provider. The SaaS provider uses the indication to determine a root cause of an application served by the SaaS provider experiencing degraded application performance.

### Description

A computer network is a geographically distributed collection of nodes interconnected by communication links and segments for transporting data between end nodes, such as personal computers and workstations, or other devices, such as sensors, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), or synchronous digital hierarchy (SDH) links, or Powerline Communications (PLC) such as IEEE 61334, IEEE P1901.2, and others. The Internet is an example of a WAN that connects disparate networks throughout the world, providing global communication between nodes on various networks. The nodes typically communicate over the network by exchanging discrete frames or packets of data according to predefined protocols, such as the Transmission Control Protocol/Internet Protocol (TCP/IP). In this context, a protocol consists of a set of rules defining how the nodes interact with each other. Computer networks may be further interconnected by an intermediate network node, such as a router, to extend the effective "size" of each network.

Smart object networks, such as sensor networks, in particular, are a specific type of network having spatially distributed autonomous devices such as sensors, actuators, etc., that cooperatively monitor physical or environmental conditions at different locations, such as, e.g., energy/power consumption, resource consumption (e.g., water/gas/etc. for advanced metering infrastructure or "AMI" applications) temperature, pressure, vibration, sound, radiation, motion, pollutants, etc. Other types of smart objects include actuators, e.g., responsible for turning on/off an engine or perform any other actions. Sensor networks, a type of smart object network, are typically shared-media networks, such as wireless or PLC networks. That is, in addition to one or more sensors, each sensor device (node) in a sensor network may generally be equipped with a radio transceiver or other communication port such as PLC, a microcontroller, and an energy source, such as a battery. Often, smart object networks are considered field area networks (FANs), neighborhood area networks (NANs), personal area networks (PANs), etc. Generally, size and cost constraints on smart object nodes (e.g., sensors) result in corresponding constraints on resources such as energy, memory, computational speed and bandwidth.

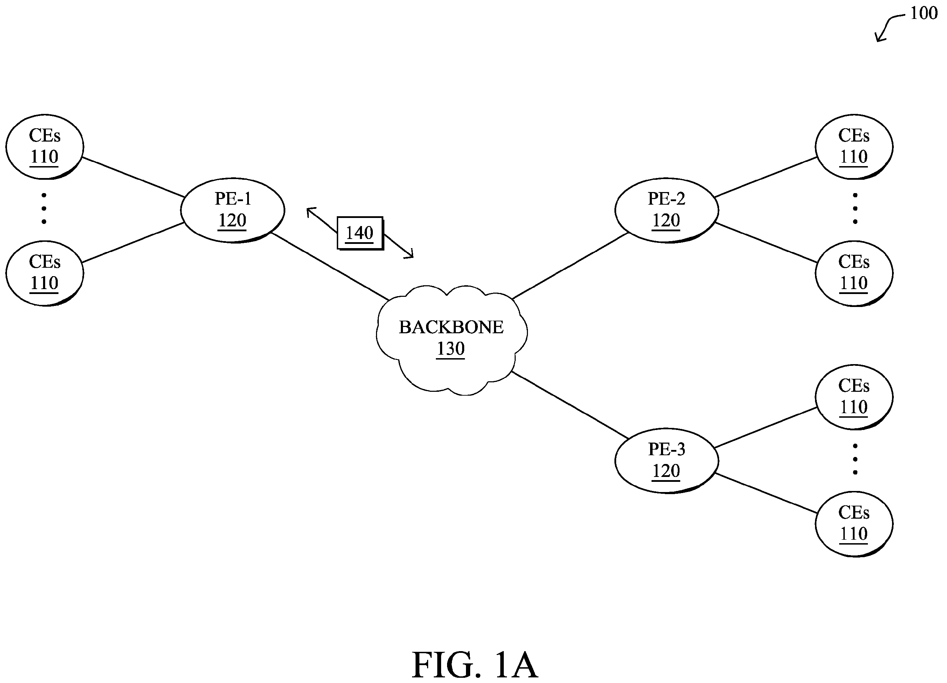

FIG. 1A is a schematic block diagram of an example computer network 100 illustratively comprising nodes/devices, such as a plurality of routers/devices interconnected by links or networks, as shown. For example, customer edge (CE) routers 110 may be interconnected with provider edge (PE) routers 120 (e.g., PE-1, PE-2, and PE-3) in order to communicate across a core network, such as an illustrative network backbone 130. For example, routers 110, 120 may be interconnected by the public Internet, a multiprotocol label switching (MPLS) virtual private network (VPN), or the like. Data packets 140 (e.g., traffic/messages) may be exchanged among the nodes/devices of the computer network 100 over links using predefined network communication protocols such as the Transmission Control Protocol/Internet Protocol (TCP/IP), User Datagram Protocol (UDP), Asynchronous Transfer Mode (ATM) protocol, Frame Relay protocol, or any other suitable protocol. Those skilled in the art will understand that any number of nodes, devices, links, etc. may be used in the computer network, and that the view shown herein is for simplicity.

In some implementations, a router or a set of routers may be connected to a private network (e.g., dedicated leased lines, an optical network, etc.) or a virtual private network (VPN), such as an MPLS VPN thanks to a carrier network, via one or more links exhibiting very different network and service level agreement characteristics. For the sake of illustration, a given customer site may fall under any of the following categories:
1.) Site Type A: a site connected to the network (e.g., via a private or VPN link) using a single CE router and a single link, with potentially a backup link (e.g., a 3G/4G/5G/LTE backup connection). For example, a particular CE router 110 shown in network 100 may support a given customer site, potentially also with a backup link, such as a wireless connection.
2.) Site Type B: a site connected to the network by the CE router via two primary links (e.g., from different Service Providers), with potentially a backup link (e.g., a 3G/4G/5G/LTE connection). A site of type B may itself be of different types:
   2a.) Site Type B1: a site connected to the network using two MPLS VPN links (e.g., from different Service Providers), with potentially a backup link (e.g., a 3G/4G/5G/LTE connection).
   2b.) Site Type B2: a site connected to the network using one MPLS VPN link and one link connected to the public Internet, with potentially a backup link (e.g., a 3G/4G/5G/LTE connection). For example, a particular customer site may be connected to network 100 via PE-3 and via a separate Internet connection, potentially also with a wireless backup link.
   2c.) Site Type B3: a site connected to the network using two links connected to the public Internet, with potentially a backup link (e.g., a 3G/4G/5G/LTE connection).
   Notably, MPLS VPN links are usually tied to a committed service level agreement, whereas Internet links may either have no service level agreement at all or a loose service level agreement (e.g., a "Gold Package" Internet service connection that guarantees a certain level of performance to a customer site).
3.) Site Type C: a site of type B (e.g., types B1, B2 or B3) but with more than one CE router (e.g., a first CE router connected to one link while a second CE router is connected to the other link), and potentially a backup link (e.g., a wireless 3G/4G/5G/LTE backup link). For example, a particular customer site may include a first CE router 110 connected to PE-2 and a second CE router 110 connected to PE-3.

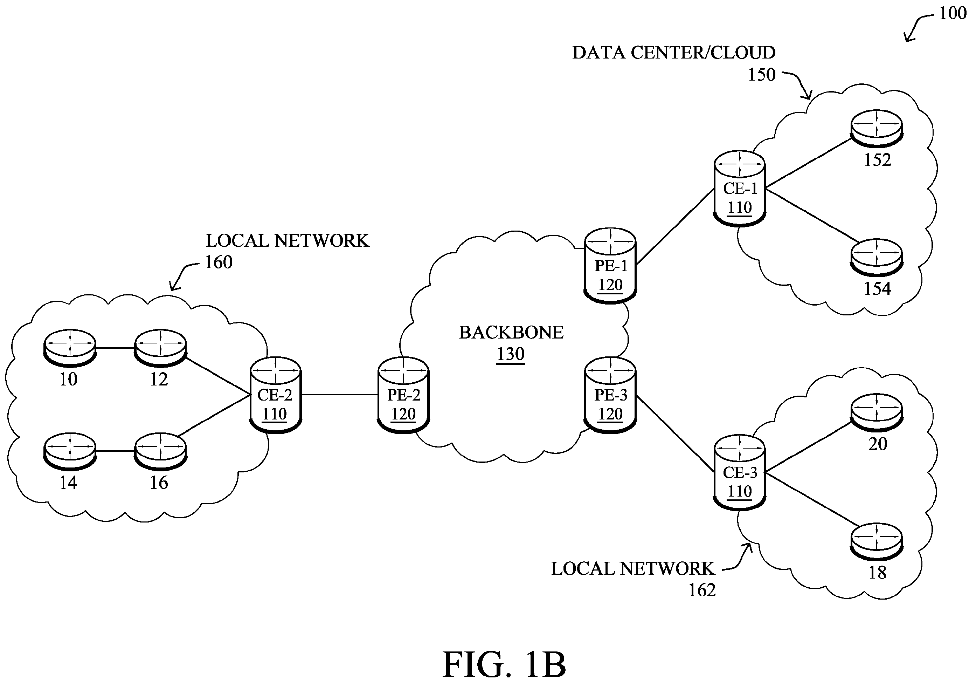

FIG. 1B illustrates an example of network 100 in greater detail, according to various embodiments. As shown, network backbone 130 may provide connectivity between devices located in different geographical areas and/or different types of local networks. For example, network 100 may comprise local/branch networks 160, 162 that include devices/nodes 10-16 and devices/nodes 18-20, respectively, as well as a data center/cloud environment 150 that includes servers 152-154. Notably, local networks 160-162 and data center/cloud environment 150 may be located in different geographic locations.

Servers 152-154 may include, in various embodiments, a network management server (NMS), a dynamic host configuration protocol (DHCP) server, a constrained application protocol (CoAP) server, an outage management system (OMS), an application policy infrastructure controller (APIC), an application server, etc. As would be appreciated, network 100 may include any number of local networks, data centers, cloud environments, devices/nodes, servers, etc.

In some embodiments, the techniques herein may be applied to other network topologies and configurations. For example, the techniques herein may be applied to peering points with high-speed links, data centers, etc.

According to various embodiments, a software-defined WAN (SD-WAN) may be used in network 100 to connect local network 160, local network 162, and data center/cloud 150. In general, an SD-WAN uses a software defined networking (SDN)-based approach to instantiate tunnels on top of the physical network and control routing decisions, accordingly. For example, as noted above, one tunnel may connect router CE-2 at the edge of local network 160 to router CE-1 at the edge of data center/cloud 150 over an MPLS or Internet-based service provider network in backbone 130. Similarly, a second tunnel may also connect these routers over a 4G/5G/LTE cellular service provider network. SD-WAN techniques allow the WAN functions to be virtualized, essentially forming a virtual connection between local network 160 and data center/cloud 150 on top of the various underlying connections. Another feature of SD-WAN is centralized management by a supervisory service that can monitor and adjust the various connections, as needed.

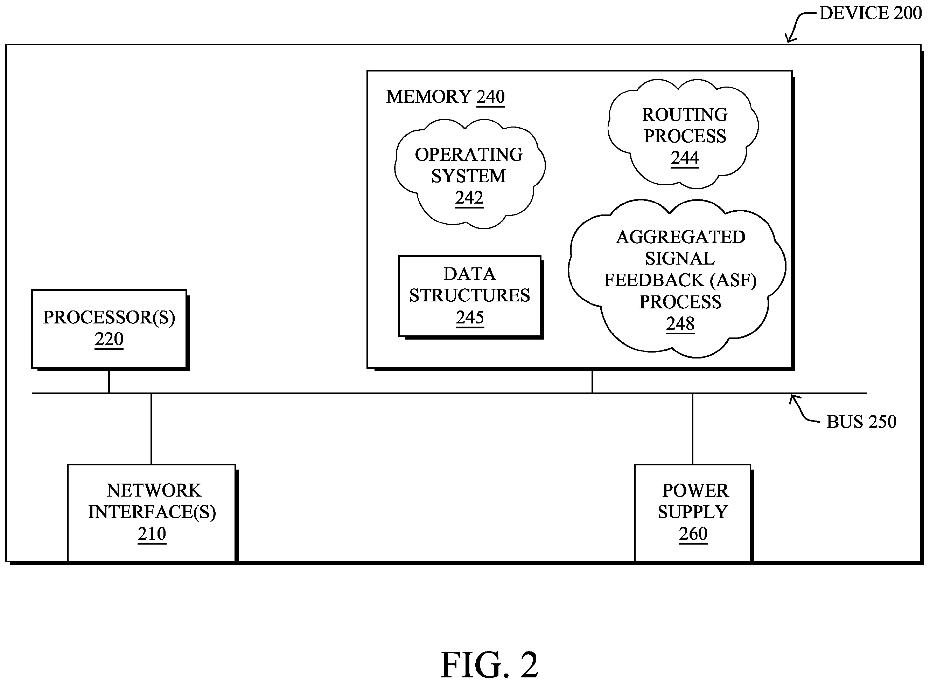

FIG. 2 is a schematic block diagram of an example node/device 200 that may be used with one or more embodiments described herein, e.g., as any of the computing devices shown in FIGS. 1A-1B, particularly the PE routers 120, CE routers 110, nodes/device 10-20, servers 152-154 (e.g., a network controller/supervisory service located in a data center, etc.), any other computing device that supports the operations of network 100 (e.g., switches, etc.), or any of the other devices referenced below. The device 200 may also be any other suitable type of device depending upon the type of network architecture in place, such as IoT nodes, etc. Device 200 comprises one or more network interfaces 210, one or more processors 220, and a memory 240 interconnected by a system bus 250, and is powered by a power supply 260.

The network interfaces 210 include the mechanical, electrical, and signaling circuitry for communicating data over physical links coupled to the network 100. The network interfaces may be configured to transmit and/or receive data using a variety of different communication protocols. Notably, a physical network interface 210 may also be used to implement one or more virtual network interfaces, such as for virtual private network (VPN) access, known to those skilled in the art.

The memory 240 comprises a plurality of storage locations that are addressable by the processor(s) 220 and the network interfaces 210 for storing software programs and data structures associated with the embodiments described herein. The processor 220 may comprise necessary elements or logic adapted to execute the software programs and manipulate the data structures 245. An operating system 242 (e.g., the Internetworking Operating System, or IOS^{®}, of Cisco Systems, Inc., another operating system, etc.), portions of which are typically resident in memory 240 and executed by the processor(s), functionally organizes the node by, inter alia, invoking network operations in support of software processors and/or services executing on the device. These software processors and/or services may comprise a routing process 244 and/or an aggregated signal feedback (ASF) process 248, as described herein, any of which may alternatively be located within individual network interfaces.

It will be apparent to those skilled in the art that other processor and memory types, including various computer-readable media, may be used to store and execute program instructions pertaining to the techniques described herein. Also, while the description illustrates various processes, it is expressly contemplated that various processes may be embodied as modules configured to operate in accordance with the techniques herein (e.g., according to the functionality of a similar process). Further, while processes may be shown and/or described separately, those skilled in the art will appreciate that processes may be routines or modules within other processes.

In general, routing process (services) 244 contains computer executable instructions executed by the processor 220 to perform functions provided by one or more routing protocols. These functions may, on capable devices, be configured to manage a routing/forwarding table (a data structure 245) containing, e.g., data used to make routing/forwarding decisions. In various cases, connectivity may be discovered and known, prior to computing routes to any destination in the network, e.g., link state routing such as Open Shortest Path First (OSPF), or Intermediate-System-to-Intermediate-System (ISIS), or Optimized Link State Routing (OLSR). Conversely, neighbors may first be discovered (i.e., a priori knowledge of network topology is not known) and, in response to a needed route to a destination, send a route request into the network to determine which neighboring node may be used to reach the desired destination. Example protocols that take this approach include Ad-hoc On-demand Distance Vector (AODV), Dynamic Source Routing (DSR), DYnamic MANET On-demand Routing (DYMO), etc. Notably, on devices not capable or configured to store routing entries, routing process 244 may consist solely of providing mechanisms necessary for source routing techniques. That is, for source routing, other devices in the network can tell the less capable devices exactly where to send the packets, and the less capable devices simply forward the packets as directed.

In various embodiments, as detailed further below, ASF process 248 may also include computer executable instructions that, when executed by processor(s) 220, cause device 200 to perform the techniques described herein. To do so, in some embodiments, ASF process 248 may utilize machine learning. In general, machine learning is concerned with the design and the development of techniques that take as input empirical data (such as network statistics and performance indicators), and recognize complex patterns in these data. One very common pattern among machine learning techniques is the use of an underlying model M, whose parameters are optimized for minimizing the cost function associated to M, given the input data. For instance, in the context of classification, the model M may be a straight line that separates the data into two classes (e.g., labels) such that M = a*x + b*y + c and the cost function would be the number of misclassified points. The learning process then operates by adjusting the parameters a,b,c such that the number of misclassified points is minimal. After this optimization phase (or learning phase), the model M can be used very easily to classify new data points. Often, M is a statistical model, and the cost function is inversely proportional to the likelihood of M, given the input data.

In various embodiments, ASF process 248 may employ one or more supervised, unsupervised, or semi-supervised machine learning models. Generally, supervised learning entails the use of a training set of data, as noted above, that is used to train the model to apply labels to the input data. For example, the training data may include sample telemetry that has been labeled as normal or anomalous. On the other end of the spectrum are unsupervised techniques that do not require a training set of labels. Notably, while a supervised learning model may look for previously seen patterns that have been labeled as such, an unsupervised model may instead look to whether there are sudden changes or patterns in the behavior of the metrics. Semi-supervised learning models take a middle ground approach that uses a greatly reduced set of labeled training data.

Example machine learning techniques that ASF process 248 can employ may include, but are not limited to, nearest neighbor (NN) techniques (e.g., k-NN models, replicator NN models, etc.), statistical techniques (e.g., Bayesian networks, etc.), clustering techniques (e.g., k-means, mean-shift, etc.), neural networks (e.g., reservoir networks, artificial neural networks, etc.), support vector machines (SVMs), logistic or other regression, Markov models or chains, principal component analysis (PCA) (e.g., for linear models), singular value decomposition (SVD), multi-layer perceptron (MLP) artificial neural networks (ANNs) (e.g., for non-linear models), replicating reservoir networks (e.g., for non-linear models, typically for time series), random forest classification, or the like.

The performance of a machine learning model can be evaluated in a number of ways based on the number of true positives, false positives, true negatives, and/or false negatives of the model. For example, the false positives of the model may refer to the number of times the model incorrectly predicted that conditions in the network will result in an unacceptable user/application experience. Conversely, the false negatives of the model may refer to the number of times the model incorrectly predicted an acceptable experience. True negatives and positives may refer to the number of times the model correctly predicted whether the experience will be acceptable or unacceptable, respectively. Related to these measurements are the concepts of recall and precision. Generally, recall refers to the ratio of true positives to the sum of true positives and false negatives, which quantifies the sensitivity of the model. Similarly, precision refers to the ratio of true positives the sum of true and false positives.

As noted above, in software defined WANs (SD-WANs), traffic between individual sites are sent over tunnels. The tunnels are configured to use different switching fabrics, such as MPLS, Internet, 4G or 5G, etc. Often, the different switching fabrics provide different quality of service (QoS) at varied costs. For example, an MPLS fabric typically provides high QoS when compared to the Internet, but is also more expensive than traditional Internet. Some applications requiring high QoS (e.g., video conferencing, voice calls, etc.) are traditionally sent over the more costly fabrics (e.g., MPLS), while applications not needing strong guarantees are sent over cheaper fabrics, such as the Internet.

Traditionally, network policies map individual applications to Service Level Agreements (SLAs), which define the satisfactory performance metric(s) for an application, such as loss, latency, or jitter. Similarly, a tunnel is also mapped to the type of SLA that is satisfies, based on the switching fabric that it uses. During runtime, the SD-WAN edge router then maps the application traffic to an appropriate tunnel. Currently, the mapping of SLAs between applications and tunnels is performed manually by an expert, based on their experiences and/or reports on the prior performances of the applications and tunnels.

The emergence of infrastructure as a service (IaaS) and software as a service (SaaS) is having a dramatic impact of the overall Internet due to the extreme virtualization of services and shift of traffic load in many large enterprises. Consequently, a branch office or a campus can trigger massive loads on the network.

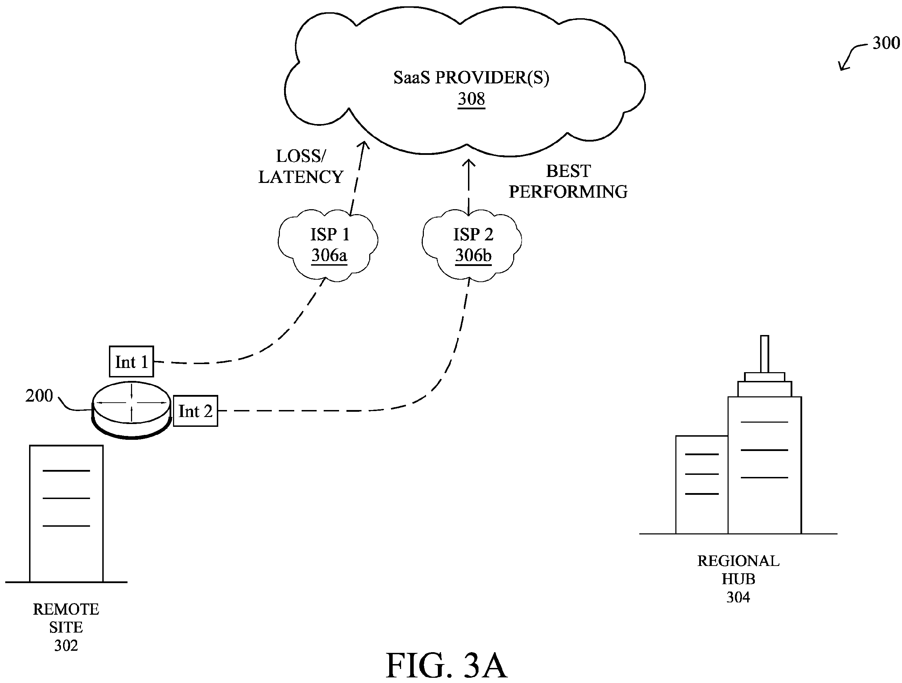

FIGS. 3A-3B illustrate example network deployments 300, 310, respectively. As shown, a device 200 (e.g., a router) located at the edge of a remote site 302 may provide connectivity between a local area network (LAN) of the remote site 302 and one or more cloud-based, SaaS providers 308. For example, in the case of an SD-WAN, device 200 may provide connectivity to SaaS provider(s) 308 via tunnels across any number of networks 306. This allows clients located in the LAN of remote site 302 to access cloud applications (e.g., Office 365^{™}, Dropbox^{™}, etc.) served by SaaS provider(s) 308.

As would be appreciated, SD-WANs allow for the use of a variety of different pathways between an edge device and an SaaS provider. For example, as shown in example network deployment 300 in FIG. 3A, device 200 may utilize two Direct Internet Access (DIA) connections to connect with SaaS provider(s) 308. More specifically, a first interface of device 200 (e.g., a network interface 210, described previously), Int 1, may establish a first communication path (e.g., a tunnel) with SaaS provider(s) 308 via a first Internet Service Provider (ISP) 306a, denoted ISP 1 in FIG. 3A. Likewise, a second interface of device 200, Int 2, may establish a backhaul path with SaaS provider(s) 308 via a second ISP 306b, denoted ISP 2 in FIG. 3A.

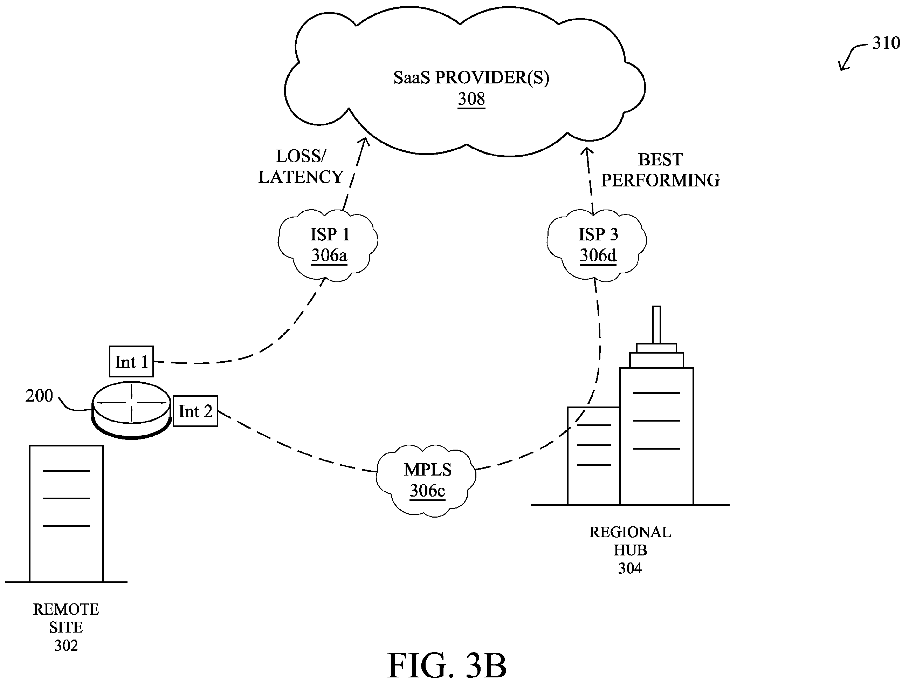

FIG. 3B illustrates another example network deployment 310 in which Int 1 of device 200 at the edge of remote site 302 establishes a first path to SaaS provider(s) 308 via ISP 1. In contrast to the example in FIG. 3A, Int 2 of device 200 may establish a second path to SaaS provider(s) 308 via a private corporate network 306c (e.g., an MPLS network) to a private data center or regional hub 304 which, in turn, provides connectivity to SaaS provider(s) 308 via another network 306d, ISP 3.

Note that, in all cases, a variety of access technologies may be used (e.g., ADSL, 4G, 5G, etc.), as well as various networking technologies (e.g., public Internet, MPLS (with or without strict SLA), etc.) to connect the LAN of remote site 302 to SaaS provider(s) 308. Other deployments scenarios are also possible (e.g. Colo, access to SaaS via Zscaler or Umbrella services).

A challenge that still exists with respect to cloud-based applications is the identification of the root cause of degraded user experience/application performance. For example, if the degradation is related to the network connection, the degradation may be caused by the edge device/router or the final mile of connectivity to the cloud.

### Aggregated Signal Feedback for SaaS Experience in Multi-Cloud SD-WAN Deployments

The techniques herein introduce an Aggregated Signal Feedback (ASF) approach for evaluating SaaS experience that is well suited for networking deployments, such as multi-cloud, SD-WAN deployments. In contrast with existing approaches used in SaaS deployments whereby the edge device (operated by a customer or a Service Provider) may provide highly granular telemetry related to "path experience" (e.g., delay, loss, latency), the ASF-based approach introduced herein takes a number of local variables into account that may impact application experience. In some aspects, statistical modeling and/or machine learning can be used to detect anomalies and compute anomaly scores that are then provided to the SaaS for root cause analysis and internal workload optimization (e.g., change of workload distribution, BGP announcements, etc.). Such information can also be provided anonymously, in some cases. In further aspects, the anomaly scores may be used by the corresponding edge device(s) for more optimal path selection, optionally augmented with root cause analysis on the networking side, as well. Such feedback may be provided upon detecting application experience degradation or sent without solicitation, in various embodiments.

Illustratively, the techniques described herein may be performed by hardware, software, and/or firmware, such as in accordance with the aggregated signal feedback (ASF) process 248, which may include computer executable instructions executed by the processor 220 (or independent processor of interfaces 210) to perform functions relating to the techniques described herein (e.g., in conjunction with routing process 244).

Specifically, according to various embodiments, an edge device located at an edge of a local network provides connectivity between the local network and a cloud-based software as a service (SaaS) provider via one or more interfaces. The edge device obtains telemetry data associated with the edge device for a plurality of metrics. The edge device makes a determination that one or more of the plurality of metrics is anomalous. The edge device sends, based on the determination, an indication of the determination to the SaaS provider. The SaaS provider uses the indication to determine a root cause of an application served by the SaaS provider experiencing degraded application performance.

Operationally, the techniques herein propose a degree of collaboration between a SaaS service and the networking services/devices, to improve the user/application experience for a given application. For example, a degraded user experience/application performance may manifest itself as the application freezing or pausing for the user, responding slowly or not at all, or the like. The first path of such a collaboration consists in providing a "label" from the cloud service provider (CSP) for the SaaS service that reflects the application experience every X-number of minutes or, alternatively, in some unsolicited manner. In return, granular telemetry can also be reported from the edge to SaaS provider. These mechanisms allow for the following:
- Upon detecting a low quality of experience for a SaaS application, the reported networking-based telemetry could be used for troubleshooting purposes. For example, the SaaS provider could use the reported network telemetry to determine whether the root cause of a problem lies with the edge device or the last mile connectivity to the cloud.
- The edge device can use the reported information to infer the root cause of any issues and reactively or proactively select an optimal path for the application traffic.

As would be appreciated, path selection by the cloud service provider (CSP)/SaaS provider may also be possible, in further embodiments, although this may be undesirable in most deployments.

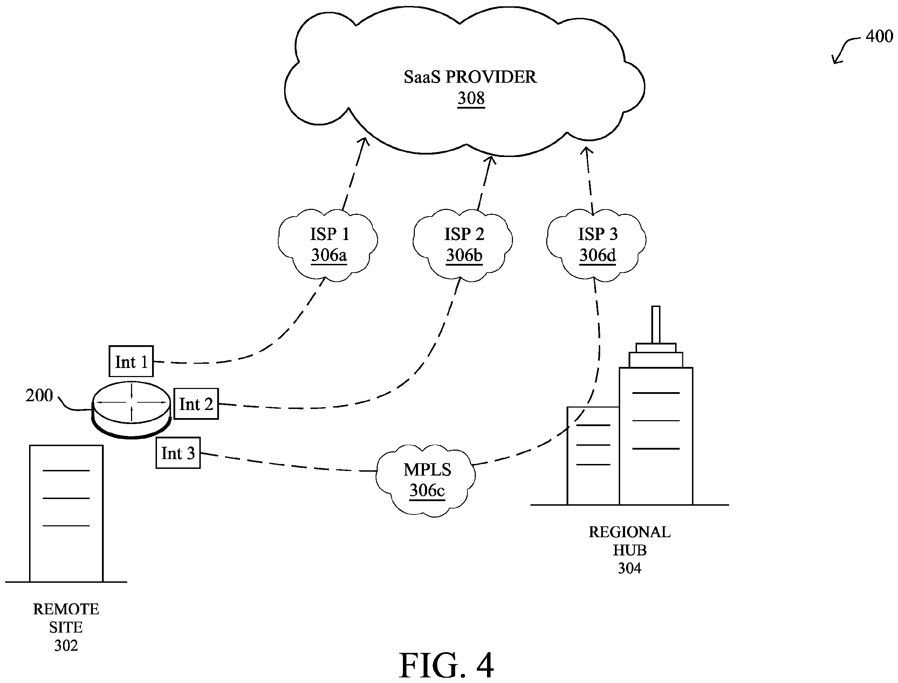

To better illustrate the techniques herein, consider the network deployment 400 shown in FIG. 4. Continuing the previous examples shown in FIGS. 3A-3B, assume now that device 200 located at the edge of remote site 302 includes interfaces Int 1, Int 2, and Int 3, which each provide connectivity between the LAN of remote site 302 and a specific SaaS provider 308. More specifically, Int 1 of device 200 may establish a first path to SaaS provider 308 via ISP 1, Int 2 of device 200 may establish a second path to SaaS provider 308 via ISP 2, and Int 3 of device 200 may establish a third path to SaaS provider 308 by establishing an MPLS connection with regional hub 304 which, in turn, provides connectivity to SaaS provider 308 via ISP 3.

The classic approach to evaluating networking-caused issues entails gathering telemetry from the edge thanks to probes (e.g., BGP probes, HTTP probes, etc.), reflecting the path characteristics/metrics such as delay, loss, jitter, etc. Unfortunately, such an approach is not sufficient for purposes of determining the root cause of degradation of the user experience/application performance for a number of reasons:
- The path metrics (e.g., delay, loss, jitter) can hardly be mapped to the user/application experience.
- Doing so would also require heavy probing with high granularity that should be provided to the SaaS provider.
- Such variables do not cover the full set of potential causes of application issues. Indeed, in many circumstances, loss, delays, etc., are actually attributable to the local edge state (e.g. CPU, memory, disk usage, etc.).

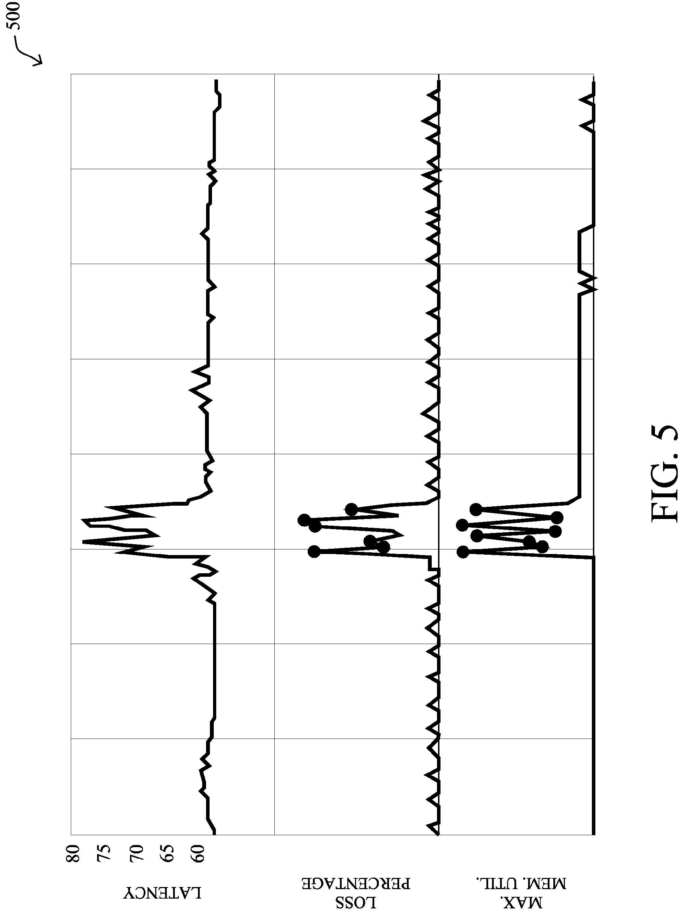

FIG. 5 illustrates a set of plots 500 demonstrating the correlation between latency, loss, and the local state at the edge. As shown, there is a high correlation between loss and memory utilization spikes at the edge device. This highlights the fact relying solely on path metrics such as loss and latency are insufficient for purposes of troubleshooting. Indeed, the absence of an actual root cause may lead to a very misleading conclusion as to why the user experience/application performance has degraded. For example, simply assessing the measured latency or loss percentage along the path to the SaaS provider may lead to the incorrect conclusion that the degradation is due to the service provider, while the edge router is really to blame. This can lead to the wrong corrective measures being taken, such as the traffic with the SaaS provider being rerouted.

Another potential root cause of poor user experience/application performance is improper configuration. For example, improper QoS configurations, DHCP markings, queuing policies, etc., can also result in unacceptable application experiences.

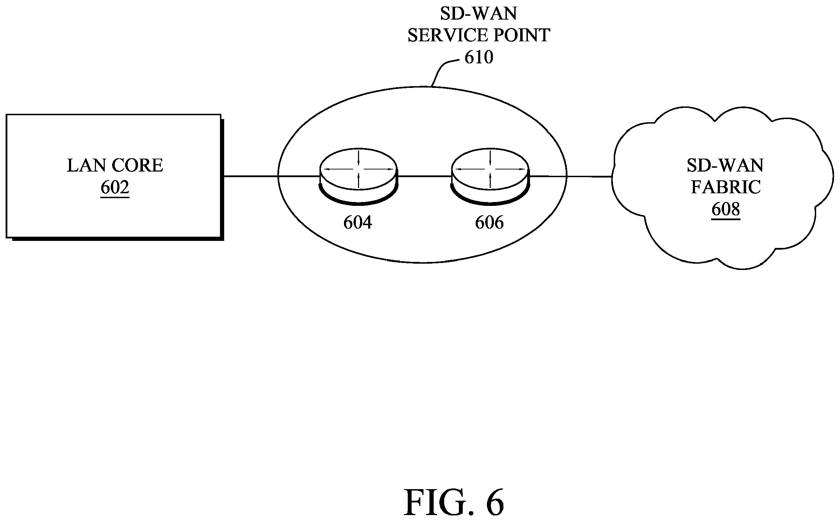

A further challenge with respect to determining the root cause of degraded user experience/application performance exists when multiple networking equipment is located at the network edge. For example, FIG. 6 illustrates an example of a common situation in which there are several routers (e.g., routers 604-606) located at the SD-WAN service point 610 that connects the LAN core 602 to the SD-WAN fabric 608. In such a situation, multi-step investigation may be needed, to identify the root cause of poor application experience.

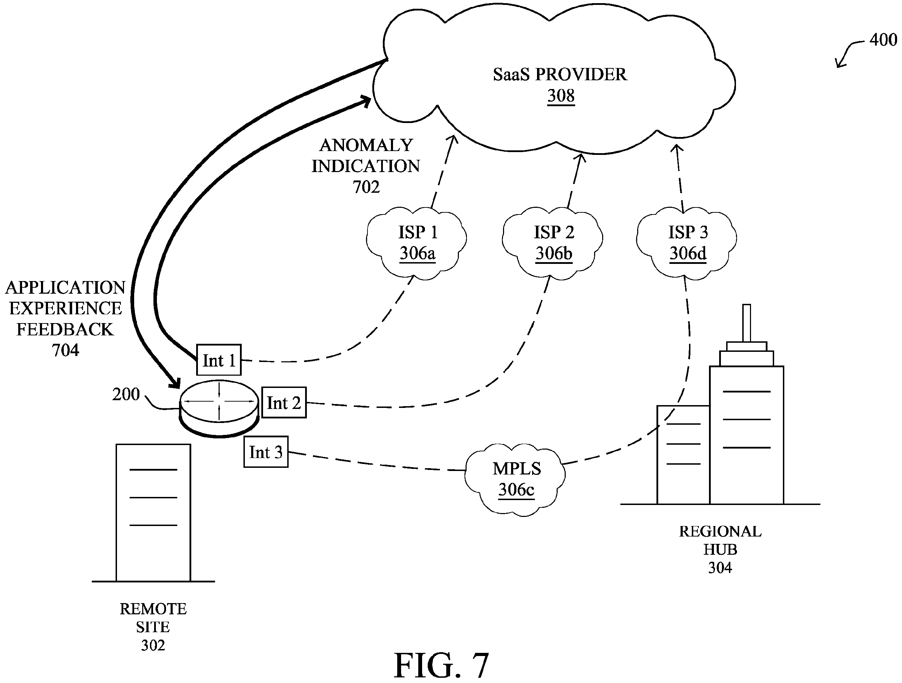

FIG. 7 illustrates an example of the use of the aggregated signal feedback (ASF) mechanism introduced herein, according to various embodiments. As shown, and continuing the example of FIG. 4 described previously, device 200 at the edge of remote site 302 may execute an ASF engine (e.g., process 248) to compute a signal that can be used by SaaS provider 308 to determine the root cause of degradation of the user experience/application performance ob served on that end.

In various embodiments, the ASF engine of device 200 may obtain telemetry data for a plurality of metrics and determine whether any of these metrics are anomalous. In turn, device 200 may provide an indication 702 of the determination to SaaS provider 308. Such an indication can be used by SaaS provider 308 to identify the root cause of any degraded user experience of its served application.

In one embodiment, the ASF engine of service 200 may determine that one or more metrics are anomalous through the use of configured threshold for a combination of metrics. For example, such variables/metrics may include any or all of the following:
- Edge CPU usage
- Edge memory usage
- Edge disk utilization
- Queue depth metrics (e.g., average, mean, highwater marks, etc.)
- Packet drops
- RED statistics
- Probing results (e.g., latency, delay, loss, etc.)
- Other states of networking entities at the edge, which can be discovered thanks to IGP or other suitable information

Device 200 may then use threshold-based rules defined by a subject matter expert (SME), to compute a score for each category/metric. For example, if the CPU usage by device 200 is greater than 90%, then score_CPU=3, if the CPU usage is between 60-90%, then score_CPU=2, etc. In turn, device 200 may weight the sum of the scores using a technique such as machine learning distance learning, to compute an aggregated, global "networking" health score and sent to SaaS provider 308 as indication 702. This global score can then be leveraged by SaaS 308 provider for purposes of root cause analysis with respect to degraded user/application experiences. In another embodiment, indication 702 may include the sub-score(s) for any of the anomalous metrics along with additional (optional) information, allowing for a more granular root cause analysis by SaaS provider 308.

In another embodiment, edge device 200 may use machine learning-based anomaly detection to detect anomalies in any of the metrics/variables. Statistical approaches can also be used for each of the variables described above that may have an impact of the overall network experience. For example, in a simple implementation, device 200 may flag a particular metric/variable as anomalous according to the following approach:
- Select a sampling time window T and compute a statistical moment (e.g. 90^{th} percentile, etc.)
- Compute distributions and compute Q1 quantile, Q3 quantile, inter-quantile range (IQR) and outlier limits.
- Define an outlier as Q1 - K*IQR and Q3 + K*IQR
- Compute anomaly score as distance to Q1 - K*IQR and Q3 + K*IQR

In another embodiment, device 200 may identify anomalous metric(s) using a machine learning model that has been constructed to compute anomaly scores using percentile regression, e.g., using a Gradient Boosted Tree (GBT) or the like, and compute an outlier score as the distance to the predicted (lower/upper band) percentile. Such an approach is likely to be highly efficient for the ASF engine of device 200, since it may allow for fine toothed root cause analysis of the anomaly using various techniques such as the weights of input feature, Shapley Additive explanation (SHAP) values, Partial Dependence Plots and Individual Conditional Expectation, or the Mean Decrease Accuracy (MDA). It is expected that a machine learning-based approach will be superior to statistical analysis in terms of root causing capabilities. Another approach may be to use an autoencoder or dictionary learning, to implement the machine learning model of device 200.

In yet another embodiment the ASF engine of device 200 may rely on change point detection of any the plurality of metrics/variables. To do so, device 200 may represent each metric/variable in the form of a time series, and the ASF engine may use change point detection to detect a significant value change. When such algorithms are used and implemented as either binary classifiers or multi-class classifier with various levels of precision, their performance can be assessed using G-mean.

Regardless of the technique used by the ASF engine of device 200 to detect anomalies, device 200 may provide an indication 702 of the determined anomalous metric(s) to SaaS provider 308 on a highly-coarse basis or on a more granular basis. In the coarse indication embodiment, indication 702 may take the form of an aggregated, global health score computed by device 200 and based on the assessed metric(s). For example, similar to how many SaaS providers quantify the user experience (e.g., the application experience is 'OK,' 'Degraded,' or 'Bad'), the health score computed by device 200 may take the form of a predefined category. Alternatively, or in addition thereto, the ASF engine of device 200 could also provide indication 702 on a more granular basis, such as anomaly detection on the individual metrics for a given router at the edge (e.g., high CPU spike, low memory), on a local interface (e.g., higher water mark of queues depth, packet drops, etc.). Optionally, the ASF engine of device 200 could also indicate to SaaS provider 308 the root cause of the degraded application experience, as determined at the edge of remote site 302.

In one embodiment, the anomalies detected and reported by the ASF engine of device 200 may be application- specific. For example, consider the case of QoS. In such a case, the ASF engine of device 200 may compute the networking score for a given application served by SaaS provider 308. Although some variables may be global (e.g., network latency for a given tunnel used by all applications), other variables may be application-specific. For example, if an application A is marked with a given DHCP used by a queue Q of device 200, the ASF engine of device 200 may provide an anomaly score for that specific queue used by application A via indication 702, as opposed to all scores.

Said differently, a key aspect of the techniques herein is the edge indicating anomalous conditions to the SaaS provider. In further embodiments, the signaling may be bi-directional whereby SaaS provider 308 provides application experience feedback 704 to the ASF engine of device 200. This allows both ends of a given connection to diagnose and rectify any unacceptable application experiences (e.g., by load balancing, rerouting the traffic, etc.). In one embodiment, the ASF engine of device 200 may identify any anomalous metrics and send indication 702, in response to receiving feedback 704 that indicates degraded application performance (e.g., the experience associated with a given application has gone from 'OK' to 'Degraded.'). In another embodiment, the ASF engine of device 200 may provide indication 702 to SaaS provider 308 on an unsolicited basis, such as when certain thresholds are crossed, on expiration of a local timer of device 200, or the like.

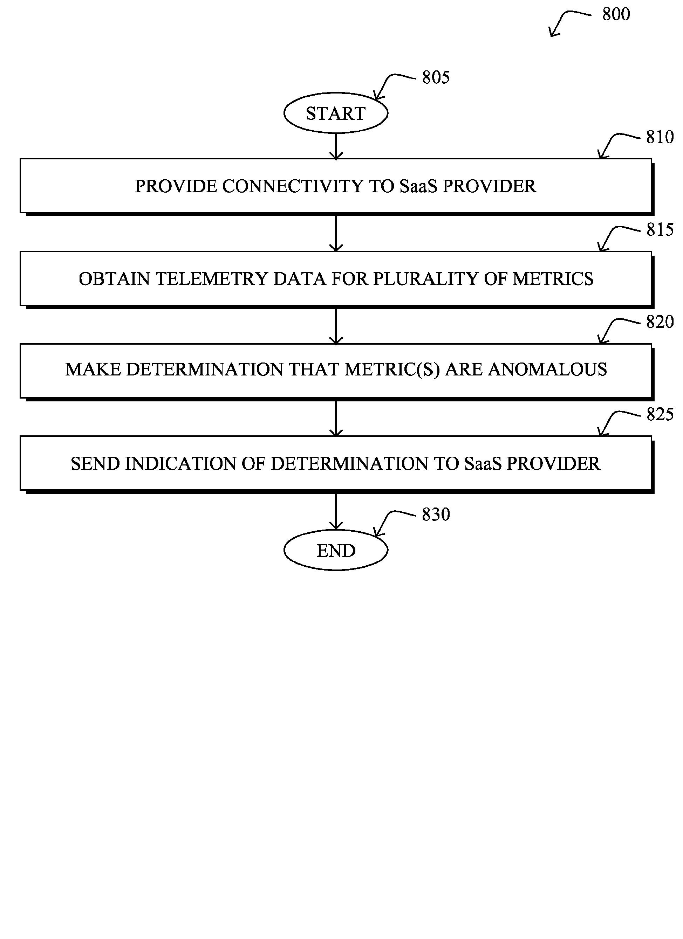

FIG. 8 illustrates an example simplified procedure for sending feedback to an SaaS provider, in accordance with one or more embodiments described herein. For example, a non-generic, specifically configured device (e.g., device 200), such as an edge device, may perform procedure 800 by executing stored instructions (e.g., process 248). The procedure 800 may start at step 805, and continues to step 810, where, as described in greater detail above, the edge device may provide connectivity between a local network and a cloud-based software as a service (SaaS) provider via one or more interfaces. In some embodiments, the edge device may be an SD-WAN router. For example, the router may use its interfaces to form tunnels to the SaaS provider via any number of different networks (e.g., via a first Internet provider, a second Internet provider, an MPLS network, etc.).

At step 815, as detailed above, the edge device may obtain telemetry data associated with the edge device for a plurality of metrics. For example, the metrics may indicate a resource utilization of the edge device (e.g., CPU load, memory usage, disk utilization, etc.), state information for the one or more interfaces of the edge device (e.g., queue depth statistics, packet drops, RED statistics, etc.), and/or or probing results of the edge device probing one or more paths/tunnels to the SaaS provider (e.g., measured loss, latency, delays, etc.).

At step 820, the edge device may make a determination that one or more of the plurality of metrics is anomalous, as described in greater detail above. In one embodiment, the edge device may do so by comparing each of the metrics to one or more predefined thresholds. For example, if the edge device determines that its CPU load has exceeded a predefined threshold of 80%, it may deem this metric to be anomalous. In another embodiment, the edge device may make the determination by using change point detection, to detect a change in one or more of the metrics that is considered 'significant.' Such an approach may, for example, identify when the probability distribution of the one or more metrics changes, thereby indicating a potentially anomalous condition. In yet another embodiment, the edge device may make the determination by using a machine learning model to compute anomaly scores for the plurality of metrics. For example, the edge device may compute the anomaly scores using percentile regression (e.g., via a gradient boosted tree or the like) and identifying outliers based on their distances to the predicted percentiles.

At step 825, as detailed above, the edge device may send, based on the determination, an indication of the determination to the SaaS provider. In various embodiments, the SaaS provider uses the indication to determine a root cause of an application served by the SaaS provider experiencing degraded application performance. In one embodiment, the indication may take the form of an aggregated, global computed by the edge device based on the one or more metrics. For example, the edge device may sum the anomaly scores of the metrics, potentially with weightings (e.g., by using distance learning), to compute the global health score. In another embodiment, the edge device may simply indicate the computed anomaly scores for the metric(s) to the SaaS provider. Procedure 800 then ends at step 830.

It should be noted that while certain steps within procedure 800 may be optional as described above, the steps shown in FIG. 8 are merely examples for illustration, and certain other steps may be included or excluded as desired. Further, while a particular order of the steps is shown, this ordering is merely illustrative, and any suitable arrangement of the steps may be utilized without departing from the scope of the embodiments herein.

The techniques described herein, therefore, specify an approach that could be used with all cloud service providers (CSPs)/SaaS providers, to provide an aggregated/synthetic view of the network from the edge. Doing so allows the provider to troubleshoot degraded application performance that may be attributable to the edge device(s) or the connection between the provider and the edge.

In embodiments, an edge device located at an edge of a local network provides connectivity between the local network and a cloud-based software as a service (SaaS) provider via one or more interfaces. The edge device obtains telemetry data associated with the edge device for a plurality of metrics. The edge device makes a determination that one or more of the plurality of metrics is anomalous. The edge device sends, based on the determination, an indication of the determination to the SaaS provider. The SaaS provider uses the indication to determine a root cause of an application served by the SaaS provider experiencing degraded application performance.

While certain embodiments are described herein with respect to using certain models for purposes of predicting failures or evaluating what-if scenarios, the models are not limited as such and may be used for other types of predictions, in other embodiments. In addition, while certain protocols are shown, other suitable protocols may be used, accordingly.

The foregoing description has been directed to specific embodiments. It will be apparent, however, that other variations and modifications may be made to the described embodiments, with the attainment of some or all of their advantages. For instance, it is expressly contemplated that the components and/or elements described herein can be implemented as software being stored on a tangible (non-transitory) computer-readable medium (e.g., disks/CDs/RAM/EEPROM/etc.) having program instructions executing on a computer, hardware, firmware, or a combination thereof. Accordingly, this description is to be taken only by way of example and not to otherwise limit the scope of the embodiments herein. Therefore, it is the object of the appended claims to cover all such variations and modifications as come within the scope of the appended claims.

## Claims

1. A method comprising:
providing, by an edge device (200) located at an edge of a local network (160), connectivity between the local network (160) and a cloud-based software as a service ,SaaS, provider (308) via one or more interfaces (210);
obtaining, by the edge device (200), telemetry data associated with the edge device (200) for a plurality of metrics; and
in response to receiving, at the edge device (200), feedback from the SaaS provider that an application on the edge device that is served by the SaaS provider is experiencing degraded application performance:
making, by the edge device (200), a determination that one or more of the plurality of metrics is anomalous by comparing the plurality of metrics against predefined thresholds, and
sending, by the edge device and based on the determination, an indication of the determination (702) to the SaaS provider (308), wherein the SaaS provider (308) uses the indication (702) to determine a root cause of the application served by the SaaS provider experiencing degraded application performance.

2. The method as in claim 1, wherein the edge device (200) comprises a software-defined wide area network ,SD-WAN, router.

3. The method as in any preceding claim, wherein making the determination that one or more of the plurality of metrics is anomalous comprises:
using a machine learning model to compute anomaly scores for the plurality of metrics.

4. The method as in any preceding claim, wherein making the determination that one or more of the plurality of metrics is anomalous comprises:
using change point detection on the plurality of metrics, to detect a change in the one or more metrics.

5. The method as in any preceding claim, wherein making the determination that one or more of the plurality of metrics is anomalous comprises:
comparing each of the metrics to one or more predefined thresholds.

6. The method as in any preceding claim, wherein the plurality of metrics comprises one or more of: a resource utilization of the edge device (200), state information for the one or more interfaces (210) of the edge device (200), or probing results of the edge device (200) probing one or more paths to the SaaS provider.

7. The method as in any preceding claim, further comprising:
computing the indication as an aggregated, global health score based on the one or more metrics.

8. An apparatus, comprising:
one or more network interfaces (210);
a processor (220) coupled to the one or more network interfaces (210) and configured to execute one or more processes; and
a memory (240) configured to store a process executable by the processor (220), the process when executed configured to:
provide connectivity between a local network (160) and a cloud-based software as a service ,SaaS, provider (308) via the one or more interfaces (210);
obtain telemetry data associated with the apparatus for a plurality of metrics; and
in response to receiving feedback from the SaaS provider (308) that an application on the edge device that is served by the SaaS provider (308) is experiencing degraded application performance:
make a determination that one or more of the plurality of metrics is anomalous by comparing the plurality of metrics against predefined thresholds, and
send, based on the determination, an indication of the determination (702) to the SaaS provider (308), wherein the SaaS provider (308) is configured to use the indication (702) to determine a root cause of the application served by the SaaS provider (308) experiencing degraded application performance.

9. The apparatus as in claim 8, wherein the apparatus comprises a software-defined wide area network, SD-WAN, router.

10. The apparatus as in claim 8 or 9, wherein the apparatus makes the determination that one or more of the plurality of metrics is anomalous by:
using a machine learning model to compute anomaly scores for the plurality of metrics; and/or
using change point detection on the plurality of metrics, to detect a change in the one or more metrics; and/or
comparing each of the metrics to one or more predefined thresholds.

11. The apparatus as in claim 8, 9 or 10, wherein:
the plurality of metrics comprises one or more of: a resource utilization of the apparatus, state information for the one or more interfaces of the apparatus, or probing results of the apparatus probing one or more paths to the SaaS provider; and/or
wherein the process when executed is further configured to compute the indication as an aggregated, global health score based on the one or more metrics.

12. A computer program product, such as a tangible, non-transitory, computer-readable medium, storing program instructions that cause an edge device (200) located at an edge of a local network (160) to execute a process comprising the method of any of claims 1 to 7.

## Patentansprüche

1. Verfahren, das Folgendes umfasst:
Bereitstellen, durch ein an einem Rand eines lokalen Netzwerks (160) befindliches Edge-Gerät (200), von Konnektivität zwischen dem lokalen Netzwerk (160) und einem Cloud-basierte-SaaS-(Software as a Service)-Anbieter (308) über eine oder mehrere Schnittstellen (210);
Erhalten, durch das Edge-Gerät (200), von mit dem Edge-Gerät (200) assoziierten Telemetriedaten für eine Mehrzahl von Metriken; und
als Reaktion auf den Empfang, am Edge-Gerät (200), von Feedback vom SaaS-Anbieter, dass eine Anwendung auf dem vom SaaS-Anbieter bedienten Edge-Gerät eine verminderte Anwendungsleistung aufweist:
Feststellen, durch das Edge-Gerät (200), dass eine oder mehrere der Mehrzahl von Metriken anomal ist/sind, durch Vergleichen der Mehrzahl von Metriken mit vordefinierten Schwellenwerten, und
Senden, durch das Edge-Gerät und auf der Basis der Feststellung, einer Angabe der Feststellung (702) an den SaaS-Anbieter (308), wobei der SaaS-Anbieter (308) die Angabe (702) zum Bestimmen einer Grundursache für die verminderte Anwendungsleistung der vom SaaS-Anbieter bedienten Anwendung benutzt.

2. Verfahren nach Anspruch 1, wobei das Edge-Gerät (200) einen SD-WAN-(Software-defined Wide Area Network)-Router umfasst.

3. Verfahren nach einem vorherigen Anspruch, wobei die Feststellung, dass eine oder mehrere der Mehrzahl von Metriken anomal ist/sind, Folgendes beinhaltet:
Benutzen eines Machine-Learning-Modells zum Berechnen von Anomaliebewertungen für die Mehrzahl von Metriken.

4. Verfahren nach einem vorherigen Anspruch, wobei die Feststellung, dass eine oder mehrere der Mehrzahl von Metriken anomal ist/sind, Folgendes beinhaltet:
Benutzen einer Änderungspunkterkennung für die Mehrzahl von Metriken zum Erkennen einer Änderung in den ein oder mehreren Metriken.

5. Verfahren nach einem vorherigen Anspruch, wobei die Feststellung, dass eine oder mehrere der Mehrzahl von Metriken anomal ist/sind, Folgendes umfasst:
Vergleichen jeder der Metriken mit einem oder mehreren vordefinierten Schwellenwerten.

6. Verfahren nach einem vorherigen Anspruch, wobei die Mehrzahl von Metriken eines oder mehrere umfasst von:
einer Ressourcenauslastung des Edge-Geräts (200), Statusinformationen für die ein oder mehreren Schnittstellen (210) des Edge-Geräts (200) oder Prüfergebnisse des Edge-Geräts (200), das einen oder mehrere Pfade zum SaaS-Anbieter prüft.

7. Verfahren nach einem vorherigen Anspruch, das ferner Folgendes umfasst:
Berechnen der Anzeige als aggregierte, globale Gesundheitsbewertung auf der Basis der ein oder mehreren Metriken.

8. Vorrichtung, die Folgendes umfasst:
eine oder mehrere Netzwerkschnittstellen (210);
einen Prozessor (220), der mit den ein oder mehreren Netzwerkschnittstellen (210) gekoppelt und zum Ausführen eines oder mehrerer Prozesse konfiguriert ist; und
einen Speicher (240), der zum Speichern eines vom Prozessor (220) ausführbaren Prozesses konfiguriert ist, wobei der Prozess bei seiner Ausführung konfiguriert ist zum:
Bereitstellen von Konnektivität über die ein oder mehreren Schnittstellen (210) zwischen einem lokalen Netzwerk (160) und einem Cloud-basierte-SaaS-(Software as a Service)-Anbieter (308);
Erhalten von mit der Vorrichtung assoziierten Telemetriedaten für eine Mehrzahl von Metriken; und
als Reaktion auf den Empfang von Feedback vom SaaS-Anbieter (308), dass eine Anwendung auf dem vom SaaS-Anbieter bedienten Edge-Gerät eine verminderte Anwendungsleistung aufweist:
Feststellen, dass eine oder mehrere der Mehrzahl von Metriken anomal ist/sind, durch Vergleichen der Mehrzahl von Metriken mit vordefinierten Schwellenwerten, und
Senden, auf der Basis der Feststellung, einer Angabe der Feststellung (702) an den SaaS-Anbieter (308), wobei der SaaS-Anbieter (308) zum Benutzen der Angabe (702) zum Bestimmen einer Grundursache für die verminderte Anwendungsleistung der vom SaaS-Anbieter (308) bedienten Anwendung konfiguriert ist.

9. Vorrichtung nach Anspruch 8, wobei die Vorrichtung einen SD-WAN-(Software-defined Wide Area Network)-Router umfasst.

10. Vorrichtung nach Anspruch 8 oder 9, wobei die Vorrichtung feststellt, dass eine oder mehrere der Mehrzahl von Metriken anomal ist/sind, durch:
Benutzen eines Machine-Learning-Modell zum Berechnen von Anomaliebewertungen für die Mehrzahl von Metriken; und/oder
Verwenden einer Änderungspunkterkennung für die Mehrzahl von Metriken, um eine Änderung in den ein oder mehreren Metriken zu erkennen; und/oder
Vergleichen jeder der Metriken mit einem oder mehreren vordefinierten Schwellenwerten.

11. Vorrichtung nach Anspruch 8, 9 oder 10, wobei:
die Mehrzahl von Metriken eines oder mehrere umfasst von: einer Ressourcenauslastung der Vorrichtung, Statusinformationen für die ein oder mehreren Schnittstellen der Vorrichtung oder Prüfergebnisse der Vorrichtung, die einen oder mehrere Pfade zum SaaS-Anbieter prüft; und/oder
wobei der Prozess bei seiner Ausführung ferner so konfiguriert ist, dass er die Anzeige als eine aggregierte, globale Gesundheitsbewertung auf der Basis der ein oder mehreren Metriken berechnet.

12. Computerprogrammprodukt, beispielsweise ein greifbares, nichtflüchtiges, computerlesbares Medium, das Programmbefehle speichert, die ein an einem Rand eines lokalen Netzwerks (160) befindliches Edge-Gerät (200) zum Ausführen eines Prozesses veranlassen, der das Verfahren nach einem der Ansprüche 1 bis 7 umfasst.

## Revendications

1. Procédé comprenant :
la fourniture, par un dispositif de périphérie (200) situé à une périphérie d'un réseau local (160), d'une connectivité entre le réseau local (160) et un fournisseur de logiciel en tant que service, SaaS, basé sur le Cloud (308) via une ou plusieurs interfaces (210) ;
l'obtention, par le dispositif de périphérie (200), de données de télémétrie associées au dispositif de périphérie (200) pour une pluralité de métriques ; et
en réponse à la réception, au niveau du dispositif de périphérie (200), d'un retour d'information à partir du fournisseur de SaaS indiquant qu'une application sur le dispositif de périphérie desservie par le fournisseur de SaaS présente une performance d'application dégradée :
la détermination, par le dispositif de périphérie (200), qu'une ou plusieurs de la pluralité de métriques sont anormales ou non en comparant la pluralité de métriques à des seuils prédéfinis, et
l'envoi, par le dispositif de périphérie et sur la base de la détermination, d'une indication de la détermination (702) au fournisseur de SaaS (308), dans lequel le fournisseur de SaaS (308) utilise l'indication (702) pour déterminer une cause première de l'application desservie par le fournisseur de SaaS présentant une performance d'application dégradée.

2. Procédé selon la revendication 1, dans lequel le dispositif de périphérie (200) comprend un routeur de réseau étendu défini par logiciel, SD-WAN.

3. Procédé selon toute revendication précédente, dans lequel la détermination qu'une ou plusieurs de la pluralité de métriques sont anormales, comprend :
l'utilisation d'un modèle d'apprentissage automatique pour calculer des scores d'anomalie pour la pluralité de métriques.

4. Procédé selon toute revendication précédente, dans lequel la détermination qu'une ou plusieurs de la pluralité de métriques sont anormales, comprend :
l'utilisation d'une détection de points de changement sur la pluralité de métriques pour détecter un changement des une ou plusieurs métriques.

5. Procédé selon toute revendication précédente, dans lequel, la détermination qu'une ou plusieurs de la pluralité de métriques sont anormales, comprend :
la comparaison de chacune des métriques à un ou plusieurs seuils prédéfinis.

6. Procédé selon toute revendication précédente, dans lequel la pluralité de métriques comprend au moins :
une utilisation de ressources du dispositif de périphérie (200), des informations d'état des une ou plusieurs interfaces (210) du dispositif de périphérie (200), et/ou des résultats de sondage du dispositif de périphérie (200) qui sondent un ou plusieurs chemins vers le fournisseur de SaaS.

7. Procédé selon toute revendication précédente, comprenant en outre :
le calcul de l'indication en tant que score de santé global, agrégré sur la base des une ou plusieurs métriques.

8. Appareil, comprenant :
une ou plusieurs interfaces réseau (210) ;
un processeur (220) couplé aux une ou plusieurs interfaces réseau (210) et configuré pour exécuter un ou plusieurs processus ; et
une mémoire (240) configurée pour stocker un processus exécutable par le processeur (220), le processus, une fois exécuté, étant configuré pour :
fournir une connectivité entre un réseau local (160) et un fourniseur de logiciel en tant que service, SaaS, basé sur le Cloud (308) via une ou plusieurs interfaces (210) ;
obtenir des données de télémétrie associées à l'appareil pour une pluralité de métriques ; et
en réponse à la réception d'un retour d'information à partir du fournisseur de SaaS (308) indiquant qu'une application sur le dispositif de périphérie desservie par le fournisseur de SaaS (308) présente une performance d'application dégradée :
déterminer qu'une ou plusieurs de la pluralité de métriques sont anormales en comparant la pluralité de métriques à des seuils prédéfinis, et
envoyer, sur la base de la détermination, une indication de la détermination (702) au fournisseur de SaaS (308), dans lequel le fournisseur de SaaS (308) est configuré pour utiliser l'indication (702) afin de déterminer la cause première de l'application desservie par le fornisseur de SaaS (308) présentant une performance d'application dégradée.

9. Appareil selon la revendication 8, l'appareil comprenant un routeur de réseau étendu défini par logiciel, SD-WAN.

10. Appareil selon la revendication 8 ou 9, l'appareil déterminant qu'une ou plusieurs de la pluralité de métriques sont anormales en :
utilisant un modèle d'apprentissage automatique pour calculer des scores d'anomalies pour la pluralité de métriques ; et/ou
utilisant une détection de points de changement sur la pluralité de métriques, pour détecter un changement des une ou plusieurs métriques ; et/ou
comparant chacune des métriques à un ou plusieurs seuils prédéfinis.

11. Appareil selon la revendication 8, 9 ou 10, dans lequel :
la pluralité de métriques comprend au moins : une utilisation de ressources de l'appareil, des informations d'état des une ou plusieurs interfaces de l'appareil, et/ou des résultats de sondage de l'appareil qui sondent un ou plusieurs chemins vers le fournisseur de SaaS ; et/ou
dans lequel le processus, une fois exécuté, est configuré en outre pour calculer l'indication en tant que score de santé global, agrégré sur la base des une ou plusieurs métriques.

12. Produit de programme informatique, tel qu'un support tangible, non transitoire lisible par ordinateur, stockant des instructions de programme qui amènent un dispositif de périphérie (200) situé à une périphérie d'un réseau local (160) à exécuter un processus comprenant le procédé selon l'une quelconque des revendications 1 à 7.
